# EUROPÄISCHE PATENTSCHRIFT

(11) **EP 1 623 817 B1**
(45) Veröffentlichungstag und Bekanntmachung des Hinweises auf die Patenterteilung: **28.05.2008**
(21) Anmeldenummer: 05016741.0
(22) Anmeldetag: 02.08.2005
(51) Int. Cl.: B29C 69/02, B29C 31/00, B29C 47/34, B29C 45/14

(54) **Verfahren und Vorrichtung zur Herstellung von Kunststoffleisten**
Method and apparatus for producing a plastic profile
Procédé et appareil pour produire un profilé en matière plastique

(30) Priorität: 07.08.2004 DE 102004038467
(43) Veröffentlichungstag der Anmeldung: 08.02.2006
(73) Patentinhaber: REHAU AG + Co, 95111 Rehau (DE)
(72) Erfinder: Summerer, Wolfgang, 95111 Rehau (DE)

(56) Entgegenhaltungen:
- EP-A- 1 325 802
- US-A- 3 380 118
- US-A- 4 911 873
- PATENT ABSTRACTS OF JAPAN Bd. 012, Nr. 274 (M-725), 29. Juli 1988 (1988-07-29) -& JP 63 057223 A (TOYODA GOSEI CO LTD), 11. März 1988 (1988-03-11)
- PATENT ABSTRACTS OF JAPAN Bd. 010, Nr. 269 (C-372), 12. September 1986 (1986-09-12) -& JP 61 093874 A (MITSUBISHI MOTORS CORP), 12. Mai 1986 (1986-05-12)
- PATENT ABSTRACTS OF JAPAN Bd. 014, Nr. 256 (M-0980), 4. Juni 1990 (1990-06-04) -& JP 02 072915 A (SANKEI GIKEN KOGYO KK), 13. März 1990 (1990-03-13)

## Beschreibung

Die Erfindung betrifft ein Verfahren zur Herstellung von Kunststoffleisten, bei dem zunächst ein Kunststoff-Endlosstrang extrudiert, anschließend abgelängt und die hierdurch entstehenden Leisten-Rohlinge schließlich endseitig mit einem angespritzten Endabschnitt versehen werden. Ferner betrifft die Erfindung eine Herstellungsvorrichtung nach dem Oberbegriff des Anspruchs 5 sowie eine mit dem eingangs erwähnten Verfahren hergestellte Kunststoffleiste.

Ein derartiges Verfahren sowie eine Vorrichtung zu dessen Durchführung sind durch offenkundige Vorbenutzung bekannt.

Das bekannte Verfahren erlaubt nur einen geringen Durchsatz, was die Anzahl der verarbeiteten Leisten-Rohlinge betrifft. Zudem ist das Verfahren teuer.

In der US 4 911 873 A ist ein Verfahren zur Herstellung von Kunststoffleisten offenbart mit folgenden Schritten: Extrusion eines Kunststoff-Endlosstrangs; Ablängen des Kunststoff-Endlosstrangs zur Herstellung von Leisten-Rohlingen; Transportieren der Leisten-Rohlinge hin zu einem Spritzgusswerkzeug; Einlegen eines Endabschnitts der Leisten-Rohlinge in eine Spritzgussform des Spritzgusswerkzeugs: Anspritzen einer Kunststoff-Endkappe an den jeweiligen Leisten-Rohling zur Herstellung der Kunststoffleisten; Abtransportieren der Kunststoffleisten.

Es ist eine Aufgabe der vorliegenden Erfindung, ein Herstellungsverfahren der eingangs genannten Art derart weiterzubilden, dass ein größerer Durchsatz, was die Anzahl der verarbeiteten Leisten-Rohlinge angeht, erreicht werden kann. Das Verfahren soll zudem Preisvorteile bieten.

Diese Aufgabe ist erfindungsgemäß gelöst durch ein Verfahren mit den im Anspruch 1 angegebenen Merkmalen.

Erfindungsgemäß wurde erkannt, dass die Ursache für den geringen Durchsatz und die hohen Kosten des vorbekannten Verfahrens darin liegt, dass die abgelängten Leisten-Rohlinge von Hand in das Spritzgusswerkzeug eingelegt und aus diesem von Hand wieder entnommen werden. Erfindungsgemäß erfolgen der Transport hin zum Spritzgusswerkzeug und das Einlegen der Leisten-Rohlinge nunmehr automatisch. Hierdurch wird, da eine höhere Prozessgeschwindigkeit gefahren werden kann, der Durchsatz des Herstellungsverfahrens erhöht. Gleichzeitig kann Personal eingespart werden, was zu einer Kostensenkung führt. Das erfindungsgemäße Verfahren ermöglicht ein vollautomatisches Anspritzen von Endkappen an beiden Enden eines Leisten-Rohlings, da auch die Arbeitsschritte im Zusammenhang mit dem zweiten Spritzgusswerkzeug automatisch ablaufen. Dies gewährleistet einen hohen Durchsatz sowie niedrige Kosten beim Gesamtprozess.

Die Verfahrensausgestaltungen nach den Ansprüchen 2 und 3 erhöhen den Durchsatz zusätzlich.

Ein störungsabhängigen Ausschleusen nach Anspruch 4 erlaubt, falls notwendig, die Herstellung von Leisten-Rohlingen auch dann, wenn ein nachgelagertes Anspritzen nicht zur Verfügung steht. Die Leisten-Rohlingen können dann definiert zwischengelagert und ggf. anderweitig verarbeitet werden.

Entsprechend ist es eine Aufgabe der Erfindung, eine Herstellungsvorrichtung für Kunststoffleisten nach dem Oberbegriff des Anspruchs 5 derart weiterzubilden, dass der Durchsatz von dieser erhöht und die Herstellungskosten verringert sind.

Diese Aufgabe ist erfindungsgemäß gelöst durch eine Herstellungsvorrichtung mit den im Kennzeichnungsteil des Anspruchs 5 angegebenen Merkmalen.

Die Vorteile der Herstellungsvorrichtung sowie der vorteilhaften Ausgestaltungen von dieser nach den Ansprüchen 6, 9 und 10 entsprechen den Vorteilen, die oben im Zusammenhang mit den Verfahrensansprüchen 1 bis 4 angegeben wurden.

Eine Transporteinrichtung für eine Mehrzahl von Leisten-Rohlingen bzw. Kunststoffleisten nach Anspruch 7 hat sich in anderem Zusammenhang im Rahmen der automatischen Prozesstechnik bewährt.

Bei einer Ausgestaltung der Transporteinrichtung und des Spritzgusswerkzeugs nach Anspruch 8 kann die Transporteinrichtung, da kein Transport der Leisten-Rohlinge längs der Leisten-Längsachse mehr notwendig ist, einfacher ausgestaltet sein. Dieser Vorteil kann z. B. dadurch erreicht werden, dass das Spritzgusswerkzeug ohne störende Holme im Transportweg der Leisten-Rohlinge, z. B. in C-Form, ausgebildet ist.

Ausführungsbeispiele der Erfindung werden nachfolgend an Hand der Zeichnung näher erläutert. In dieser zeigen:
- Fig. 1: schematisch eine Vorrichtung zur Herstellung von Kunststoffleisten;
- Fig. 2: stärker im Detail einen Ausschnitt aus der Herstellungsvorrichtung nach Fig. 1;
- Fig. 3: in vergrößertem Maßstab eine Seitenansicht einer Kunststoffleiste, hergestellt mittels einer Vorrichtung nach den Figuren 1 und 2;
- Fig. 4: einen vertikalen Längsschnitt durch die Kunststoffleiste nach Fig. 3;
- Fig. 5: einen Schnitt gemäß Linie V-V in Fig. 3;
- Fig. 6: einen Schnitt gemäß Linie VI-VI in Fig. 3;
- Fig. 7: weiter vergrößert eine perspektivische Teilansicht der Kunststoffleiste nach Fig. 3 im Bereich einer Endkappe;
- Fig. 8: weiter vergrößert einen zu Fig. 5 ähnlichen Schnitt durch die Kunststoffleiste nach Fig. 3; und
- Fig. 9: einen zu Fig. 8 ähnlichen Schnitt einer weiteren Ausführungsform einer mit einer Vorrichtung nach den Figuren 1 und 2 hergestellten Kunststoffleiste.

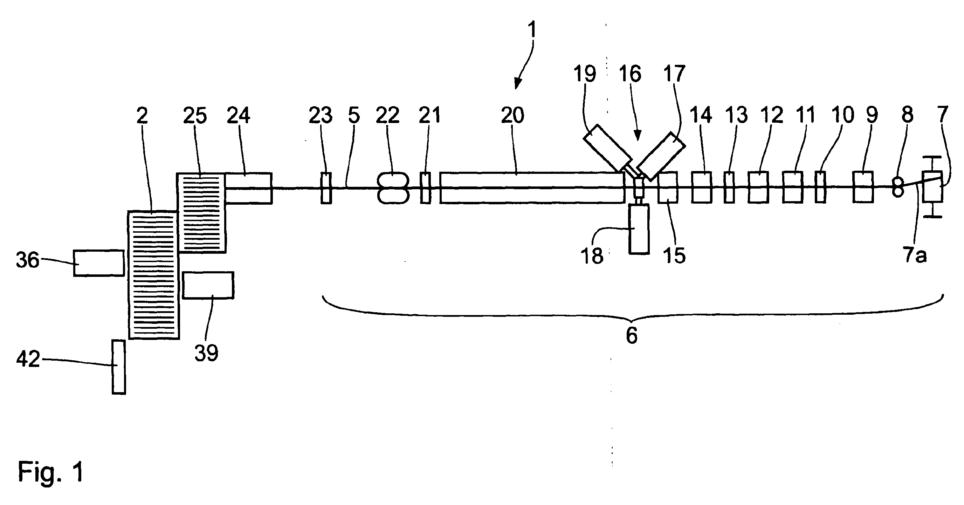

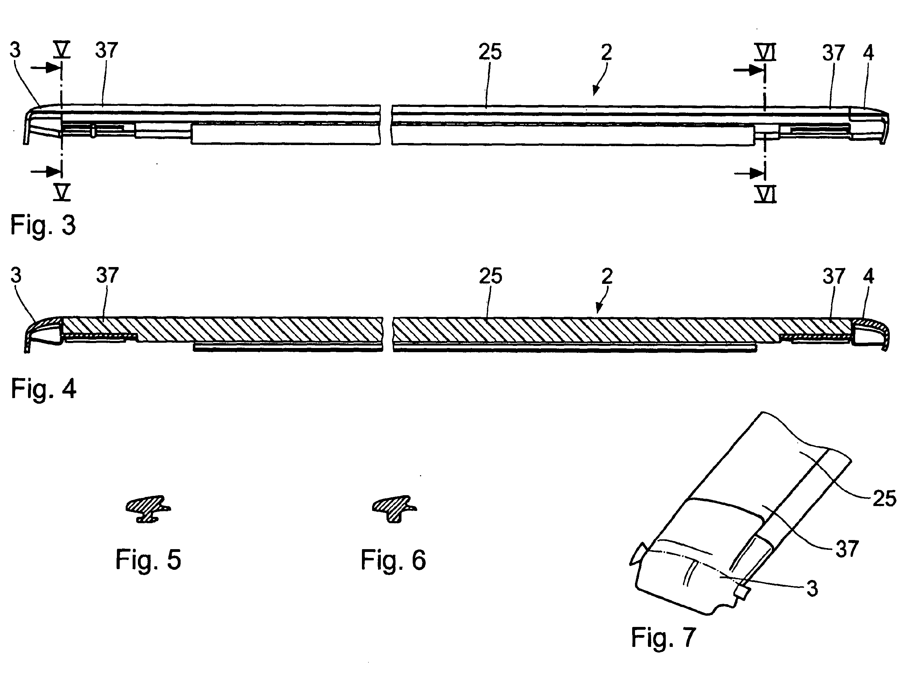

Fig. 1 zeigt in einer schematischen Übersicht eine Herstellungsvorrichtung 1 für eine in Fig. 3 dargestellte Kunststoffleiste 2 mit beiderseitigen Endkappen 3, 4. Derartige Kunststoffleisten 2 finden zum Beispiel als Dachfugenleisten für Kraftfahrzeuge Verwendung. Die Endkappen 3, 4 gewährleisten einen sauberen Abschluss der Kunststoffleiste 2.

Zur Herstellung der Kunststoffleiste 2 wird zunächst ein Kunststoff-Endlosstrang 5 durch Coextrusion in an sich bekannter Weise hergestellt. Die Komponenten der hierzu erforderlichen Strangerzeugungs- und -führungseinrichtung 6 werden daher nachfolgend anhand Fig. 1 nur grob skizziert. Die Strangerzeugungs- und -führungseinrichtung 6 umfasst ein Ablaufgerät 7 für einen Armierungsstrang 7a, dem im weiteren Transportweg des Strangs nachfolgen: Ein Paar von Transportrollen 8, eine Durchhangsteuerung 9, eine Filzbremse 10, eine Abflammeinrichtung 11, ein Richtsatz 12, eine weitere Filzbremse 13, eine Primer-Anbringungseinrichtung 14, ein HF-Generator 15. Auf den HF-Generator 15 folgt eine Coextrusionseinrichtung 16 mit drei Extrudern 17 bis 19. Nach der Coextrusionseinrichtung 16 schließt sich eine Kühlrinne 20 an, die je nach Ausführung der Strangerzeugungs- und - führungseinrichtung 6 eine Länge zwischen 9 und 18 m haben kann. Der Kühlrinne 20 folgt ein Tintenstrahldrucker 21 zum Bedrucken des Kunststoff-Endlosstrangs 5. Hinter dem Tintenstrahldrucker 21 sind eine Abzugseinrichtung 22 und eine weitere Durchhangsteuerung 23 für den Kunststoff-Endlosstrang 5 angeordnet.

Nach der Strangerzeugungs- und -führungseinrichtung 6 folgt eine Konfektioniereinrichtung 24 zum Ablängen des Kunststoff-Endlosstrangs 5 auf eine vorgegebene Länge, z. B. 1,5 oder 2 m, sodass abgelängte Leisten-Rohlinge 25 mit dieser vorgegebenen Länge produziert werden. In der Konfektioniereinrichtung 24 findet neben dem Ablängen auch ein Stanzvorgang statt, der nachfolgend noch erläutert wird.

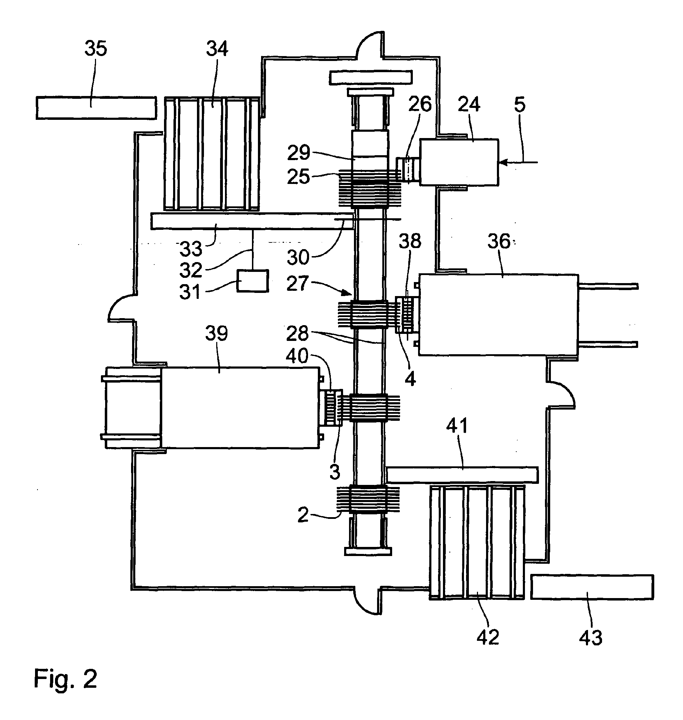

Zum automatischen Transportieren der in der Konfektioniereinrichtung 24 hergestellten Leisten-Rohlinge 25 dient eine Transporteinrichtung (vgl. Fig. 2). Diese umfasst zunächst eine als Transportkopf ausgebildete erste Übergabeeinrichtung 26 am Ausgang der Konfektioniereinrichtung 24. Der Übergabeeinrichtung 26 ist in Transportrichtung der Leisten-Rohlinge 25 nachgeordnet eine Skid-Förderstrecke 27, die ebenfalls Teil der Transporteinrichtung ist. Die Skid-Förderstrecke 27 weist als Fördermittel ein Paar von Endlos-Fördergurten 28 auf. Auf diesen laufen Skids 29, die am Ausgang der ersten Übergabeeinrichtung 26 zunächst mit nebeneinander und quer zur Transportrichtung angeordneten Leisten-Rohlingen 25 bestückt werden. Ein voll bestückter Skid 29 trägt insgesamt acht Leisten-Rohlinge 25. Beim Bestücken werden die Leisten-Rohlinge 25 auf dem Skid 29 durch entsprechende, nicht dargestellte Anschläge ausgerichtet.

Im ersten Abschnitt der Skid-Förderstrecke 27 nach der ersten Übergabeeinrichtung 26 weist die Skid-Förderstrecke 27 eine schematisch angedeutete Weiche 30 auf.

Letztere kann so angesteuert werden, dass die abgelängten Leisten-Rohlinge 25 aus dem nachgelagerten Transportweg der weiteren Herstellungsvorrichtung 1 ausgeschleust werden können. Dies kann z. B. dann der Fall sein, wenn eine Erfassungseinrichtung 31 einen Stau auf der Skid-Förderstrecke 27 aufgrund einer Störung der Herstellungsvorrichtung 1 im Verfahrensgang nach dem Ablängen feststellt. Zur Weitermeldung einer derart erfassten Störung ist die Erfassungseinrichtung 31 über eine Steuerleitung 32 mit einem Ausschleus- und Entnahmesystem 33 verbunden, über welches die Weiche 30 gesteuert wird. Ein Ausschleusen abgelängter Leisten-Rohlinge 25 kann auch dann erfolgen, wenn Leisten-Rohlinge 25 als Zwischenprodukte gelagert werden sollen. Das Ausschleus- und Entnahmesystem 33 übergibt die Leisten-Rohlinge 25 in ein Halbzeuglager 34. Die dort eingelagerten Leisten-Rohlinge 25 können in einer Verpackungsstation 35 verpackt und z. B. zum Versand vorbereitet werden.

Nicht ausgeschleuste Leisten-Rohlinge 25 gelangen auf der Skid-Förderstrecke 27 hin zu einem ersten Spritzgusswerkzeug 36 zum Anspritzen der Endkappe 4 auf den jeweiligen Leisten-Rohling 25. Zum Einlegen der für die Endkappen 4 vorgesehenen Endabschnitte 37 (vgl. Fig. 3) in die Spritzgussform des ersten Spritzgusswerkzeugs 36 dient eine zweite Übergabeeinrichtung 38. Letztere ist als Transportkopf des ersten Spritzgusswerkzeugs 36 so ausgestaltet, dass sie alle acht antransportierten Leisten-Rohlinge 25 gleichzeitig erfassen und übergeben kann. Das erste Spritzgusswerkzeug 36 ist so ausgelegt, dass an alle acht übergebenen Leisten-Rohlinge 25 einer Skid-Bestückung gleichzeitig die Endkappen 4 angespritzt werden können. Die zweite Übergabeeinrichtung 38 dient zudem zur Entnahme der Leisten-Rohlinge 25 mit den angespritzten Endkappen 4 aus dem ersten Spritzgusswerkzeug 36 und zur Rückführung auf den vor dem ersten Spritzgusswerkzeug 36 positionierten Skid 29. Bei dieser Rückführungs-Bestückung des Skids 29 erfolgt ebenfalls eine Ausrichtung der nebeneinander angeordneten, einseitig angespritzten Leisten-Rohlinge 25 mit Hilfe eines nicht dargestellten Anschlags.

Auf dem Skid 29 werden die einseitig mit der Endkappe 4 versehenen Leisten-Rohlinge 25 dann im weiteren Verlauf der Skid-Förderstrecke 27 hin zu einem zweiten Spritzgusswerkzeug 39 transportiert, welches in Bezug auf die Skid-Förderstrecke 27 dem ersten Spritzgusswerkzeug 36 gegenüberliegend angeordnet ist. Das zweite Spritzgusswerkzeug 39 ist spiegelsymmetrisch zum ersten Spritzgusswerkzeug 36 angeordnet und weist zur Skid-Förderstrecke 27 hin eine als Transportkopf gestaltete dritte Übergabeeinrichtung 40 auf, deren Aufbau und Funktion der zweiten Übergabeeinrichtung 38 des ersten Spritzgusswerkzeugs 36 entspricht.

Mit Hilfe des zweiten Spritzgusswerkzeugs 39 wird an die Leisten-Rohlinge 25 die zweite Endkappe 3 angespritzt. Nach diesem zweiten Anspritzvorgang werden die nun fertigen Kunststoffleisten 2 wieder zurück auf den Skid 29 überführt und nebeneinander ausgerichtet.

Im weiteren Verlauf der Skid-Förderstrecke 27 nach dem zweiten Spritzgusswerkzeug 39 ist ein weiteres Ausschleus- und Entnahmesystem 41 angeordnet, welches das Ausschleusen der Skids 29 mit den fertigen Kunststoffleisten 2 bewirkt. Das Ausschleus- und Entnahmesystem 41 ist dabei entsprechend dem Ausschleus- und Entnahmesystem 33 aufgebaut. Mit Hilfe des Ausschleus- und Entnahmesystem 41 gelangen die fertigen Kunststoffleisten 2 in ein Fertigteillager 42 mit nachgeschalteter Verpackungsstation 43.

Die Transporteinrichtung mit den Übergabeeinrichtungen 26, 38 und 40 sowie den Ausschleus- und Entnahmesystemen 33 und 41 arbeitet vollautomatisch und gesteuert von einer zentralen, nicht dargestellten Steuereinrichtung. Diese überwacht die zeitrichtigen Übergabe- und Ausschleusvorgänge sowie die korrekte Ausrichtung und Positionierung der Leisten-Rohlinge 25 bzw. der fertigen Kunststoffleisten 2 auf den Skids 29 sowie die Positionierung der Skids 29 relativ zur Konfektioniereinrichtung 24 und den Spritzgusswerkzeugen 36 und 39 bei den jeweiligen Übergaben.

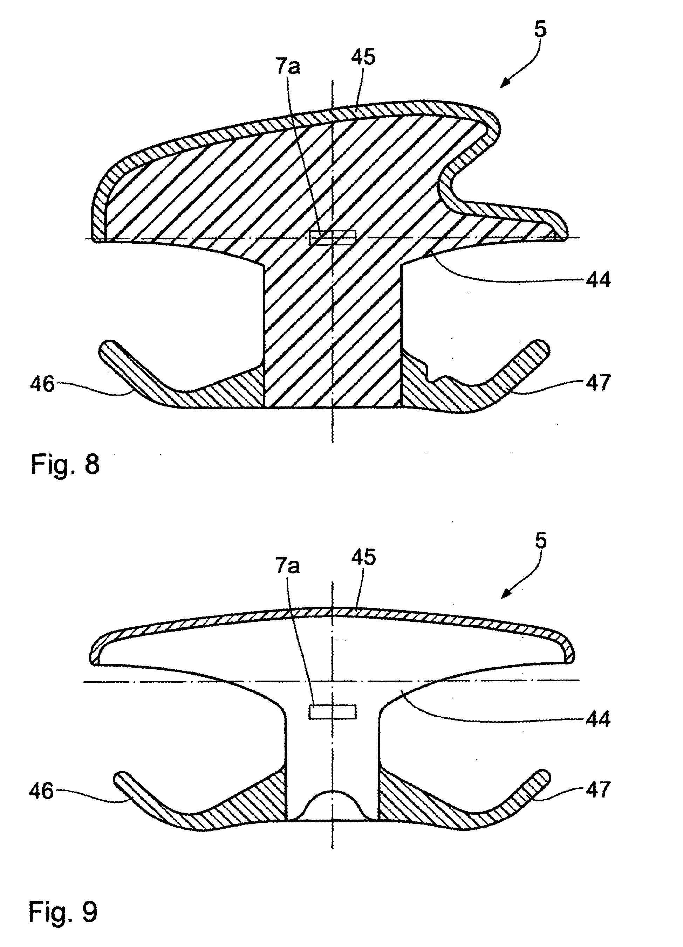

Die Querschnittsform des coextrudierten Kunststoff-Endlosstrangs 5 ist in Fig. 8 vergrößert dargestellt. Der Kunststoff-Endlosstrang 5 weist ein den Armierungsstrang 7a umgebendes Trägerprofil 44 aus einem relativ harten Kunststoffmaterial auf, welches sichtseitig mit einer coextrudierten Kunststoff-Deckschicht 45 abgedeckt ist. Zur Befestigungsseite hin sind an das Trägerprofil 44 zwei einander gegenüberliegende Weichlippenprofile 46, 47 durch Coextrusion angeformt. Im Bereich der Endabschnitte 37 der Leisten-Rohlinge 25 sind die Weichlippenprofile 46, 47 durch Stanzen entfernt. Dieses Fehlen der Weichlippenprofile 46, 47 nach dem Stanzen wird durch Vergleich der Querschnitte nach den Fig. 5 und 6 deutlich. Der entsprechende Stanzvorgang findet in der Konfektioniereinrichtung 24 statt. Dort, wo die Weichlippenprofile 46, 47 aufgrund dieses Wegstanzens fehlen, im Bereich der Schnittebene VI-VI in Fig. 3, greifen beim Spritzgießen in den Spritzgusswerkzeugen 36, 39 Formschieber zur Abdichtung der Spritzgussform am Leisten-Rohling 25 an. Zur Fixierung des Leisten-Rohlings 25 in Richtung seiner Längsachse wird der Leisten-Rohling 25 beim Spritzgießen zudem an eine Fixierkomponente, z. B. an Stahlnadeln, des Spritzgusswerkzeugs 36, 39 angedrückt.

Bei der Übergabe der Leisten-Rohlinge 25 im Zusammenhang mit dem Spritzgießen in den Spritzgusswerkzeugen 36, 39 findet ein Transport in Längsrichtung der Leisten-Rohlinge 25 statt. Bei einer alternativen Ausgestaltung der Herstellungsvorrichtung 1, die nicht dargestellt ist, sind die Spritzgusswerkzeuge 36, 39 so ausgeführt, dass ein derartiger Transport in Längsrichtung nicht erforderlich ist. Bei dieser alternativen Ausgestaltung werden die Leisten-Rohlinge 25 auf der Skid-Förderstrecke 27 ausschließlich in Transportrichtung der Fördergurte 28 bewegt. Die Endabschnitte 37 der Leisten-Rohlinge 25 stehen längs des Transportwegs soweit über, dass sie bei geöffneten Spritzgussformen der Spritzgusswerkzeuge von der Seite her in diese durch reines Verlagern in Transportrichtung der Fördergurte 28 einführbar sind, ohne dass es einer Verlagerung in Längsrichtung bedarf. Die Spritzgusswerkzeuge 36, 39 sind hierzu ohne störende Längsholme in diesem Transportweg der Leisten-Rohlinge ausgebildet. Eine derartige Anordnung kann als C-Bauform bezeichnet werden, wobei der anzuspritzende Endabschnitt 37 der Leisten-Rohlinge 25 durch die Öffnung des C hindurchgeführt wird.

Ein alternativer Querschnitt eines Kunststoff-Endlosstrangs 5, der mit der Herstellungsvorrichtung 1 hergestellt werden kann, ist in Fig. 9 dargestellt. Im Gegensatz zum Endlosstrang 5 nach Fig. 8 ist derjenige nach Fig. 9 symmetrisch zu einer vertikal verlaufenden Mittelebene. Ansonsten entspricht der Aufbau des Endlosstrangs 5 nach Fig. 9 dem nach Fig. 8.

## Patentansprüche

1. Verfahren zur Herstellung von Kunststoffleisten (2) mit folgenden Schritten:
- Extrusion eines Kunststoff-Endlosstrangs (5),
- Ablängen des Kunststoff-Endlosstrangs (5) zur Herstellung von Leisten-Rohlingen (25),
- automatisches Transportieren der Leisten-Rohlinge (25) hin zu einem Spritzgusswerkzeug (36),
- automatisches Einlegen eines Endabschnitts (37) der Leisten-Rohlinge (25) in eine Spritzgussform des Spritzgusswerkzeugs (36),
- Anspritzen einer Kunststoff-Endkappe (4) an den jeweiligen Leisten-Rohling (25) zur Herstellung der Kunststoffleisten (2),
- Automatisches Transportieren der Leisten-Rohlinge (25) hin zu einem weiteren Spritzgusswerkzeug (39),
- automatisches Einlegen eines Endabschnitts (37) der Leisten-Rohlinge (25), welche dem so eben angespritzten Endabschnitt (37) gegenüberliegt, in eine Spritzgussform des weiteren Spritzgusswerkzeugs (39),
- Anspritzen einer weiteren Kunststoff-Endkappe (3) an den jeweiligen Leisten-Rohling (25),
- Abtransportieren der Kunststoffleisten (2) hin zu einem Lager (42).

2. Verfahren nach Anspruch 1, **dadurch gekennzeichnet, dass** beim Transportieren jeweils eine Mehrzahl der Leisten-Rohlinge (25) und/oder der Kunststoffleisten (2) gleichzeitig transportiert werden.

3. Verfahren nach Anspruch 1 oder 2, **dadurch gekennzeichnet, dass** beim Anspritzen jeweils eine Mehrzahl der Leisten-Rohlinge (25) und/oder der Kunststoffleisten (2) gleichzeitig angespritzt werden.

4. Verfahren nach einem der Ansprüche 1 bis 3, **dadurch gekennzeichnet, dass** eine Störung im Verfahrensgang nach dem Ablängen erfasst und abhängig vom Vorliegen einer Störung die abgelängten Leisten-Rohlinge (25) aus dem nachgelagerten Anspritz-Transportweg ausgeschleust werden.

5. Vorrichtung (1) zur Herstellung von Kunststoffleisten (2)
- mit einem Extruder (17 bis 19) zur Extrusion eines Kunststoff-Endlosstrangs (5),
- mit einer Konfektioniereinrichtung (24) zum Ablängen des Kunststoff-Endlosstrangs (5) zur Herstellung von Leisten-Rohlingen (25),
- mit einem Spritzgusswerkzeug (36) zum Anspritzen einer Kunststoff-Endkappe (4) an den jeweiligen Leisten-Rohling (25) zur Herstellung der Kunststoffleisten (2),
**gekennzeichnet durch**
- eine Transporteinrichtung (26, 27, 28, 29) zum automatischen Transportieren der Leisten-Rohlinge (25) hin zum Spritzgusswerkzeug (36), wobei die Transporteinrichtung (26, 27, 28, 29) und das Spritzgusswerkzeug (36) derart ausgebildet sind, dass ein Endabschnitt (37) der Leisten-Rohlinge (25) in eine Spritzgussform des Spritzgusswerkzeugs (36) automatisch einlegbar ist,
- eine weitere Transporteinrichtung (27, 28, 29, 38, 40, 41) zum Abtransportieren der Kunststoffleisten (2) hin zu einem Lager (42),
sowie
- ein weiteres Spritzgusswerkzeug (39) zum Anspritzen einer weiteren Kunststoff-Endkappe (3) an den jeweiligen Leisten-Rohling (25) zur Herstellung der Kunststoffleisten (2),
- eine weitere Transporteinrichtung (27, 28, 29, 40) zum automatischen Transportieren der Leisten-Rohlinge (25) hin zum weiteren Spritzgusswerkzeug (39), wobei die weitere Transporteinrichtung (27, 28, 29, 40) und das weitere Spritzgusswerkzeug (39) derart ausgebildet sind, dass ein Endabschnitt (37) der Leisten-Rohlinge (25), welcher dem soeben angespritzten Endabschnitt (37) gegenüberliegt, in eine Spritzgussform des weiteren Spritzgusswerkzeugs (39) automatisch einlegbar ist.

6. Vorrichtung nach Anspruch 5, **dadurch gekennzeichnet, dass** die Transporteinrichtungen (26, 27, 28, 29, 30, 33, 38, 40, 41) derart ausgebildet sind, dass beim Transportieren jeweils eine Mehrzahl von Leisten-Rohlingen (25) und/oder der Kunststoffleisten (2) gleichzeitig transportiert werden.

7. Vorrichtung nach Anspruch 6, **dadurch gekennzeichnet, dass** die Transporteinrichtungen (26, 27, 28, 29, 30, 33, 38, 40, 41) umfassen:
- Ein Fördermittel, insbesondere eine Förderkette oder einen Fördergurt (28),
- eine Mehrzahl von Transportwagen, insbesondere von Skids (29) zur Förderung der Mehrzahl der Leisten-Rohlinge (25) und/oder der Kunststoffleisten (2).

8. Vorrichtung nach einem der Ansprüche 5 bis 7, **gekennzeichnet durch** eine Ausgestaltung der mindestens einen Transporteinrichtung (26, 27, 28, 29, 30, 33, 41) zum automatischen Transportieren der Leisten-Rohlinge (25) hin zum mindestens einen Spritzgusswerkzeug (36, 39) sowie zum Einlegen in dieses Spritzgusswerkzeug (36, 39) derart, dass beim Einlegen des Endabschnitts (37) der Leisten-Rohlinge (25) in die Spritzgussform des Spritzwerkzeugs (36, 39) die Leisten-Rohlinge (25) ausschließlich senkrecht zu deren Leisten-Längsachse transportiert werden.

9. Vorrichtung nach einem der Ansprüche 5 bis 8, **gekennzeichnet durch** eine Ausgestaltung des mindestens einen Spritzgusswerkzeugs (36, 39) derart, dass beim Anspritzen jeweils eine Mehrzahl der Leisten-Rohlinge (25) und/oder der Kunststoffleisten (2) gleichzeitig angespritzt werden.

10. Vorrichtung nach einem der Ansprüche 5 bis 9, **gekennzeichnet durch**
- eine Erfassungseinrichtung (31) zur Erfassung einer Störung im Verfahrensgang nach dem Ablängen,
- eine Weiche (30) im Transportweg nach der Konfektioniereinrichtung (24), wobei die Weiche (30) beim Vorliegen einer Störung so angesteuert wird, dass die abgelängten Leisten-Rohlinge (25) aus dem nachgelagerten Anspritz-Transportweg ausgeschleust werden.

## Claims

1. Method for producing plastic strips (2) with the following steps:
- extrusion of a continuous strand of plastic (5),
- cutting the continuous strand of plastic (5) to length to produce strip blanks (25),
- automatically transporting the strip blanks (25) to an injection-moulding tool (36),
- automatically placing an end portion (37) of the strip blanks (25) in an injection mould of the injection-moulding tool (36),
- moulding a plastic end cap (4) onto the respective strip blank (25) to produce the plastic strips (2),
- automatically transporting the plastic blanks (25) to a further injection-moulding tool (39),
- automatically placing an end portion (37) of the strip blanks (25) opposite from the end portion (37) that has just been moulded onto in an injection mould of the further injection-moulding tool (39),
- moulding a further plastic end cap (3) onto the respective strip blank (25),
- transporting the plastic strips (2) away to a store (42).

2. Method according Claim 1, **characterized in that** transporting in each case comprises simultaneously transporting a plurality of the strip blanks (25) and/or the plastic strips (2).

3. Method according to Claim 1 or 2, **characterized in that** moulding in each case comprises simultaneously moulding onto a plurality of the strip blanks (25) and/or the plastic strips (2).

4. Method according to one of Claims 1 to 3, **characterized in that** a disturbance in the procedure after cutting to length is detected and, dependent on the presence of a disturbance, the cut-to-length strip blanks (25) are rejected from the downstream moulding-transporting path.

5. Apparatus (1) for producing plastic strips (2)
- with an extruder (17 to 19) for extruding a continuous strand of plastic (5),
- with a processing device (24) for cutting the continuous strand of plastic (5) to length to produce strip blanks (25),
- with an injection-moulding tool (36) for moulding a plastic end cap (4) onto the respective strip blank (25) to produce the plastic strips (2),
**characterized by**
- a transporting device (26, 27, 28, 29) for automatically transporting the strip blanks (25) to the injection-moulding tool (36), the transporting device (26, 27, 28, 29) and the injection-moulding tool (36) being formed in such a way that an end portion (37) of the strip blanks (25) can be automatically placed in an injection mould of the injection-moulding tool (36),
- a further transporting device (27, 28, 29, 38, 40, 41) for transporting the plastic strips (2) away to a store (42),
and
- a further injection-moulding tool (39) for moulding a further plastic end cap (3) onto the respective strip blank (25) to produce the plastic strips (2),
- a further transporting device (27, 28, 29, 40) for automatically transporting the strip blanks (25) to the further injection-moulding tool (39), the further transporting device (27, 28, 29, 40) and the further injection-moulding tool (39) being formed in such a way that an end portion (37) of the strip blanks (25) opposite from the end portion (37) that has just been moulded onto can be automatically placed in an injection mould of the further injection-moulding tool (39).

6. Apparatus according to Claim 5, **characterized in that** the transporting devices (26, 27, 28, 29, 30, 33, 38, 40, 41) are formed in such a way that transporting in each case comprises simultaneously transporting a plurality of strip blanks (25) and/or plastic strips (2).

7. Apparatus according to Claim 6, **characterized in that** the transporting devices (26, 27, 38, 29, 30, 33, 38, 40, 41) comprise:
- a conveying means, in particular a conveying chain or a conveying belt (28),
- a plurality of transporting carriages, in particular skids (29), for conveying the plurality of strip blanks (35) and/or plastic strips (2).

8. Apparatus according to one of Claims 5 to 7, **characterized by** a configuration of the at least one transporting device (26, 27, 28, 29, 30, 33, 41) for automatically transporting the strip blanks (25) to the at least one injection-moulding tool (36, 39) and for placing them in this injection-moulding tool (36, 39) such that, when the end portion (37) of the strip blanks (25) is placed in the injection mould of the injection-moulding tool (36, 39), the strip blanks (25) are exclusively transported perpendicularly in relation to a longitudinal axis of the strip.

9. Apparatus according to one of Claims 5 to 8, **characterized by** a configuration of the at least one injection-moulding tool (36, 39) such that moulding in each case comprises simultaneously moulding onto a plurality of the strip blanks (25) and/or the plastic strips (2).

10. Apparatus according to one of Claims 5 to 9, **characterized by**
- a detecting device (31) for detecting a disturbance in the procedure after the cutting to length,
- a diverter (30) in the transporting path after the processing device (24), the diverter (30) being activated in the presence of a disturbance such that the cut-to-length strip blanks (25) are rejected from the downstream moulding-transporting path.

## Revendications

1. Procédé de fabrication de baguettes en matière synthétique (2), comportant les étapes suivantes:
- extrusion d'un boudin sans fin en matière synthétique (5),
- coupe à longueur du boudin sans fin en matière synthétique (5) pour la production d'ébauches de baguettes (25),
- transport automatique des ébauches de baguettes (25) jusqu'à un outil de moulage par injection (36),
- introduction automatique d'une partie terminale (37) des ébauches de baguettes (25) dans un moule de moulage par injection de l'outil de moulage par injection (36),
- surmoulage d'une coiffe d'extrémité en matière synthétique (4) sur l'ébauche de baguette respective (25) pour la fabrication des baguettes en matière synthétique (2),
- transport automatique des ébauches de baguettes (25) jusqu'à un autre outil de moulage par injection (39),
- introduction automatique d'une partie terminale (37) des ébauches de baguettes (25), qui est opposée à la partie terminale (37) précédemment surmoulée, dans un moule de moulage par injection de l'autre outil de moulage par injection (39),
- surmoulage d'une autre coiffe d'extrémité en matière synthétique (3) sur l'ébauche de baguette respective (25),
- évacuation des baguettes en matière synthétique (2) jusqu'à un lieu de stockage (42).

2. Procédé selon la revendication 1, **caractérisé en ce que**, lors du transport, on transporte simultanément chaque fois une pluralité d'ébauches de baguettes (25) et/ou de baguettes en matière synthétique (2).

3. Procédé selon la revendication 1 ou 2, **caractérisé en ce que**, lors du surmoulage, on effectue simultanément chaque fois le surmoulage d'une pluralité d'ébauches de baguettes (25) et/ou de baguettes en matière synthétique (2).

4. Procédé selon l'une quelconque des revendications 1 à 3, **caractérisé en ce que** l'on détecte une perturbation du déroulement du procédé après la coupe à longueur et, en fonction de la présence d'une perturbation, on dévie les ébauches de baguettes (25) coupées à longueur hors du chemin de transport de surmoulage qui suit.

5. Dispositif (1) de fabrication de baguettes en matière synthétique (2), comprenant
- une extrudeuse (17 à 19) pour extruder un boudin sans fin en matière synthétique (5),
- une installation de préparation (24) pour couper à longueur le boudin sans fin en matière synthétique (5) en vue de produire des ébauches de baguettes (25),
- un outil de moulage par injection (36) pour surmouler une coiffe d'extrémité en matière synthétique (4) sur l'ébauche de baguette respective (25) en vue de fabriquer les baguettes en matière synthétique (2),
**caractérisé par**
- une installation de transport (26, 27, 28, 29) pour transporter automatiquement les ébauches de baguettes (25) jusqu'à l'outil de moulage par injection (36), l'installation de transport (26, 27, 28, 29) et l'outil de moulage par injection (36) étant conçus de telle manière qu'une partie terminale (37) des ébauches de baguettes (25) puisse être introduite automatiquement dans un moule de moulage par injection de l'outil de moulage par injection (36),
- une autre installation de transport (27, 28, 29, 38, 40, 41) pour évacuer les baguettes en matière synthétique (2) jusqu'à un lieu de stockage (42),
ainsi que par
- un autre outil de moulage par injection (39) pour surmouler une autre coiffe en matière synthétique (3) sur l'ébauche de baguette respective (25) en vue de fabriquer les baguettes en matière synthétique (2),
- une autre installation de transport (27, 28, 29, 40) pour transporter automatiquement les ébauches de baguettes (25) jusqu'à l'autre outil de moulage par injection (39), l'autre installation de transport (27, 28, 29, 40) et l'autre outil de moulage par injection (39) étant conçus de telle manière qu'une partie terminale (37) des ébauches de baguettes (25), qui est opposée à la partie terminale (37) précédemment surmoulée, puisse être introduite automatiquement dans un moule de moulage par injection de l'autre outil de moulage par injection (39).

6. Dispositif selon la revendication 5, **caractérisé en ce que** les installations de transport (26, 27, 28, 29, 30, 33, 38, 40, 41) sont conçues de façon à transporter simultanément, lors du transport, chaque fois une pluralité d'ébauches de baguettes (25) et/ou de baguettes en matière synthétique (2).

7. Dispositif selon la revendication 6, **caractérisé en ce que** les installations de transport (26, 27, 28, 29, 30, 33, 38, 40, 41) comprennent:
- un moyen de transport, en particulier une chaîne transporteuse ou une courroie transporteuse (28),
- une pluralité de chariots de transport, en particulier de plateaux (29) pour le transport de la pluralité d'ébauches de baguettes (25) et/ou de baguettes en matière synthétique (2).

8. Dispositif selon l'une quelconque des revendications 5 à 7, **caractérisé par** une conception d'au moins une installation de transport (26, 27, 28, 29, 30, 33, 41) permettant de transporter automatiquement les ébauches de baguettes (25) jusqu'à au moins un outil de moulage par injection (36, 39) et de les introduire dans cet outil de moulage par injection (36, 39), de telle manière que, lors de l'introduction de la partie terminale (37) des ébauches de baguettes (25) dans le moule de moulage par injection des outils de moulage par injection (36, 39), les ébauches de baguettes (25) soient transportées exclusivement perpendiculairement à leur axe de baguette longitudinal.

9. Dispositif selon l'une quelconque des revendications 5 à 8, **caractérisé par** une conception d'au moins un outil de moulage par injection (36, 39) telle que, lors du surmoulage, on effectue chaque fois simultanément le surmoulage d'une pluralité d'ébauches de baguettes (25) et/ou de baguettes en matière synthétique (2).

10. Dispositif selon l'une quelconque des revendications 5 à 9, **caractérisé par**
- une installation de détection (31) pour détecter une perturbation dans le déroulement du procédé après la coupe à longueur,
- une aiguille (30) dans le chemin de transport, après l'installation de préparation (24), l'aiguille (30) étant, en cas d'apparition d'une perturbation, commandée de telle manière que les ébauches de baguettes (25) coupées à longueur soient déviées hors du chemin de transport de surmoulage qui suit.
